(19) Europäisches Patentamt
European Patent Office
Office européen des brevets

(11) **EP 4 471 292 A1**

(12) **EUROPEAN PATENT APPLICATION**
published in accordance with Art. 153(4) EPC

(43) Date of publication:
**04.12.2024 Bulletin 2024/49**

(21) Application number: **23746842.6**

(22) Date of filing: **20.01.2023**

(51) International Patent Classification (IPC):
**F16H 49/00** $^{(2006.01)}$

(52) Cooperative Patent Classification (CPC):
**F16H 49/00**

(86) International application number:
**PCT/JP2023/001629**

(87) International publication number:
**WO 2023/145629 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.01.2022 JP 2022009267**

(71) Applicant: **MITSUBISHI ELECTRIC
CORPORATION
Chiyoda-ku
Tokyo 100-8310 (JP)**

(72) Inventors:
• **OTOSAKA Junka**
  **Tokyo 100-8310 (JP)**
• **ONIHASHI Takayuki**
  **Tokyo 100-8310 (JP)**
• **KAMEYAMA Masaki**
  **Tokyo 100-8310 (JP)**

(74) Representative: **Diehl & Partner
Patent- und Rechtsanwaltskanzlei mbB
Erika-Mann-Straße 9
80636 München (DE)**

(54) **MAGNETIC GEAR DEVICE**

(57)     A magnetic gear device (100) includes an inner rotor (1), a pole piece module (2) in which a plurality of pole pieces (21) formed of magnetic members and a plurality of nonmagnetic parts (22) are arranged alternately in a circumferential direction, and an outer rotor (3) including a plurality of outer rotor magnets (32) arranged in the circumferential direction, the inner rotor (1), the pole piece module (2), and the outer rotor (3) being provided apart from each other in a radial direction of a shaft. A radially-inner width Rp_in of the pole piece (21) is larger than a radially-outer width Rp_out of the pole piece (21), and a maximum circumferential width Lm_out of the outer rotor magnet (32) is larger than the radially-outer width Rp_out of the pole piece (21) and is smaller than a radially-outer width Ra_out of the nonmagnetic part (22).

FIG. 1

EP 4 471 292 A1

## Description

TECHNICAL FIELD

The present disclosure relates to a magnetic gear device.

BACKGROUND ART

In recent years, a magnetic flux modulation type magnetic gear device (magnetic gear) that achieves high torque density is being studied and developed. A magnetic-geared motor (magnetic-geared rotary electric machine) obtained by integrating the magnetic gear device and a winding-type stator is also being studied and developed.
In the magnetic-geared motor, a stator coil provided therein causes a high-speed-side rotor to rotate, and a magnetic flux of a magnet provided at the high-speed-side rotor is modulated by a pole piece (modulation magnetic pole), whereby a low-speed-side rotor is caused to rotate. Through this operation, the low-speed-side rotor can obtain torque increased according to the speed ratio (speed reduction ratio) relative to the high-speed-side rotor, so that a device having high torque density can be obtained.
However, in a conventional magnetic gear device and a conventional magnetic-geared rotary electric machine, there is a problem that transmission torque is low in comparison with the usage amount of a magnet. In addition, a pole piece module has a problem in fixation structure and ensuring of the strength.
Regarding these problems, for example, Patent Document 1 discloses a structure of a magnetic gear device capable of improving transmission torque. That is, according to Patent Document 1, three variables regarding the sectional shape of a pole piece are each limited on the basis of a conditional expression, whereby each shape of the pole pieces located between the rotors is improved, a magnetic flux can be concentrated in an air gap between each rotor and the pole pieces, and transmission torque is improved.
In addition, in a magnetic gear device according to Patent Document 2, nonmagnetic metal rods are provided so as to penetrate, in an axial direction, pole pieces, and the strength of a pole piece module (low-speed rotor in Patent Document 2) is ensured.

CITATION LIST

PATENT DOCUMENT

Patent Document 1: Japanese Laid-Open Patent Publication (translation of PCT application) No. 2016-533706
Patent Document 2: Japanese Laid-Open Patent Publication No. 2016-135014

SUMMARY OF THE INVENTION

PROBLEM TO BE SOLVED BY THE INVENTION

As described above, conventionally, each shape of the pole pieces or the pole piece module is devised, whereby transmission torque is improved or the strength of the pole piece is ensured.
Meanwhile, a motor system has been required to be further reduced in size and weight, and a magnetic gear device has been required to have higher transmission torque as well as a reduced size thereof.
The present disclosure has been made to solve the above problems, and an object of the present disclosure is to provide a magnetic gear device which has higher transmission torque and a structure enabling size and weight reduction.

MEANS TO SOLVE THE PROBLEM

A magnetic gear device according to the present disclosure includes, in a radial direction about an axis: an inner rotor; a pole piece module which is provided apart from the inner rotor and in which a plurality of pole pieces formed of magnetic members and a plurality of nonmagnetic parts are arranged alternately in a circumferential direction; and an outer rotor which is provided apart from the pole piece module and includes a plurality of outer rotor magnets arranged in the circumferential direction. In a cross section in a direction of the axis, each pole piece has a shape that has a first side having a radially-outer width Rp_out, a second side having a radially-inner width Rp_in, and a third side and a fourth side connecting the first side and the second side in the radial direction. Where a maximum circumferential width of each outer rotor magnet is defined as Lm_out, and a radially-outer width of each nonmagnetic part is defined as Ra_out, the radially-inner width Rp_in of the pole piece is larger than the radially-outer width Rp_out of the pole piece, and the maximum circumferential width Lm_out of the outer rotor magnet is larger than the radially-outer width Rp_out of the pole piece and is smaller than the radially-outer width Ra_out of the nonmagnetic part.

EFFECT OF THE INVENTION

In the magnetic gear device according to the present disclosure, a main magnetic flux can be increased by picking up a larger amount of magnetic fluxes of inner rotor magnets, and a leakage flux of an outer rotor magnet can be reduced, to increase the main magnetic flux. Therefore, higher transmission torque can be obtained with a less amount of magnets and pole piece material. In addition, size and weight reduction can be achieved.

BRIEF DESCRIPTION OF THE DRAWINGS

[FIG. 1] FIG. 1 is a partial sectional view showing the configuration of a magnetic gear device according to embodiment 1, along a plane perpendicular to an axial direction.
[FIG. 2] FIG. 2 is a sectional view showing the configuration of the magnetic gear device according to embodiment 1, along a plane parallel to the axial direction.
[FIG. 3] FIG. 3 is a partial enlarged view of a pole piece module of the magnetic gear device according to embodiment 1.
[FIG. 4] FIG. 4 is a partial enlarged view of a pole piece module according to embodiment 2.
[FIG. 5] FIG. 5 is a partial enlarged view of another pole piece module according to embodiment 2.
[FIG. 6] FIG. 6 is a partial enlarged view of still another pole piece module according to embodiment 2.
[FIG. 7] FIG. 7 is a partial enlarged view of a pole piece module according to embodiment 3.
[FIG. 8] FIG. 8 is a partial enlarged view of a pole piece module according to embodiment 4.
[FIG. 9] FIG. 9 is partial enlarged views illustrating examples of pole piece modules according to embodiment 5.
[FIG. 10] FIG. 10 is sectional views each illustrating an example of the pole piece module according to embodiment 5, along a plane parallel to the axial direction.
[FIG. 11] FIG. 11 is a sectional view illustrating an example of another pole piece module according to embodiment 5, along a plane parallel to the axial direction.
[FIG. 12] FIG. 12 illustrates an example of still another pole piece module according to embodiment 5.
[FIG. 13] FIG. 13 illustrates an example of still another pole piece module according to embodiment 5, and shows a modification of that shown in FIG. 11.
[FIG. 14] FIG. 14 is perspective views illustrating examples of other pole piece modules according to embodiment 1.

DESCRIPTION OF EMBODIMENTS

Hereinafter, as an example of a magnetic gear device, a magnetic speed reducer will be described, but the present disclosure is not limited to the magnetic speed reducer. A main operation is also performed in the same manner, in both the magnetic speed increaser and the magnetic-geared rotary electric machine. In the drawings, the same reference characters denote the same or corresponding parts.

Embodiment 1

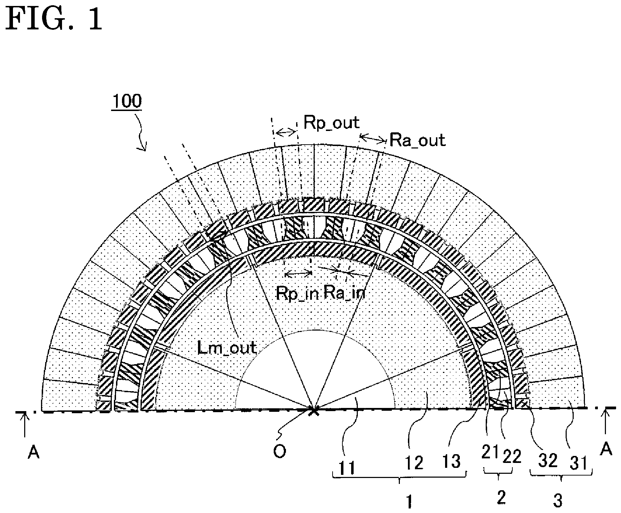

Hereinafter, a magnetic gear device will be described with reference to FIG. 1 to FIG. 3, using a magnetic speed reducer according to embodiment 1 as an example.

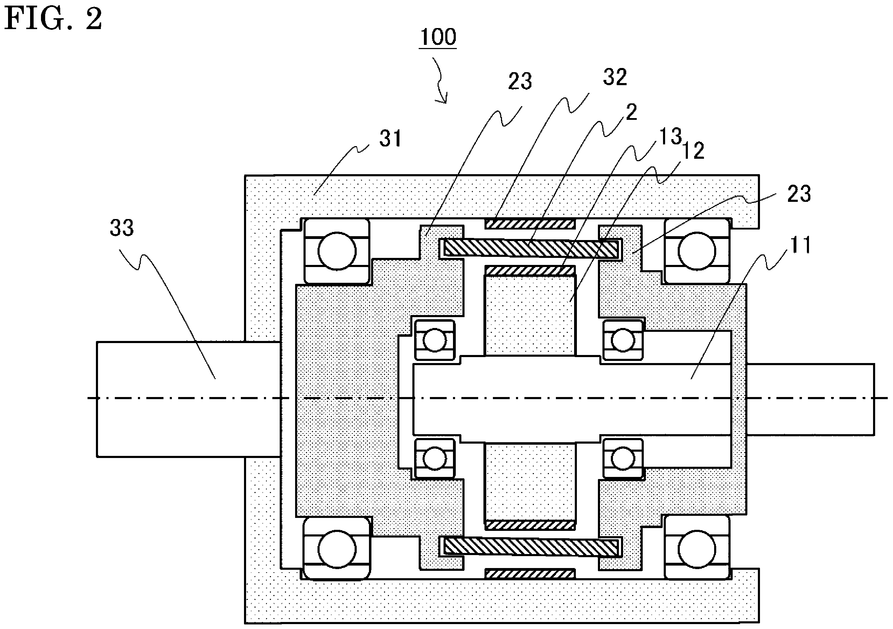

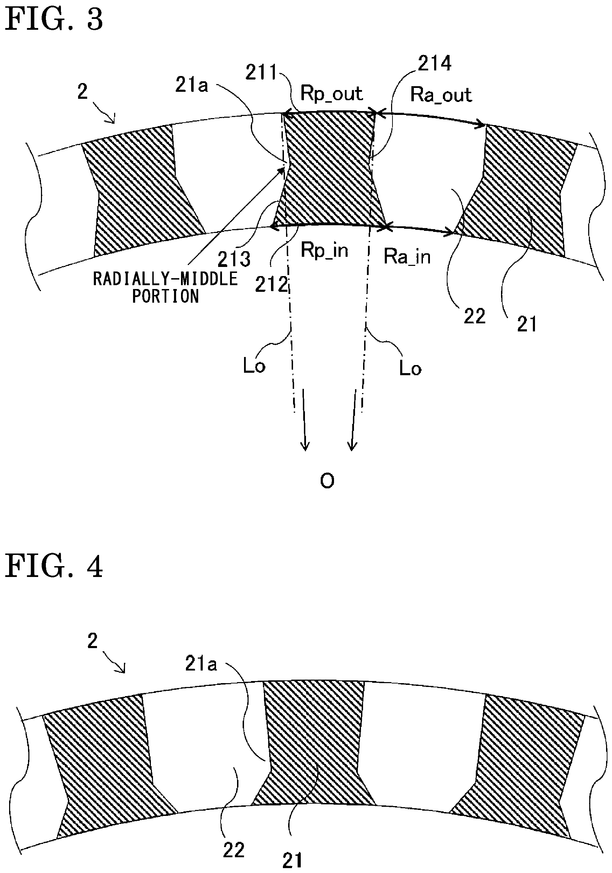

FIG. 1 is a partial sectional view showing the configuration of a magnetic gear device according to embodiment 1, along a plane perpendicular to an axial direction, FIG. 2 is a sectional view along an A-A direction in FIG. 1, along a plane parallel to the axial direction, and FIG. 3 is a partial enlarged view of a pole piece module.
As shown in FIG. 1, in a magnetic gear device 100, an inner rotor 1, a pole piece module 2, and an outer rotor 3 are disposed apart from each other in this order toward a radially-outer side from a center 0 of a rotor shaft.
The inner rotor 1 includes an inner rotor shaft 11 provided at the center O of the rotor shaft, an inner rotor core 12 fixed to an outer periphery of the inner rotor shaft 11, and an inner rotor magnet 13 formed of a permanent magnet and provided at an outer periphery of the inner rotor core 12, and a plurality of the inner rotor magnets 13 are arranged so as to be equally spaced from each other. A pole piece module 2 is provided on a radially-outer side of the inner rotor 1 with a gap layer of air (also referred to as air gap layer) therebetween having a constant width.
As shown in FIG. 1, in the pole piece module 2, pole pieces 21 each formed by stacking electromagnetic steel sheets in the axial direction and nonmagnetic parts 22 are arranged alternately in a circumferential direction. In addition, as shown in FIG. 2, each pole piece module 2 is fixed at both ends thereof in the axial direction by fixation members 23 formed of a nonmagnetic material such as resin or aluminum, and is connected and fixed to an external fixation base (not shown). The outer rotor 3 is provided on a radially-outer side of the pole piece module 2 with a gap layer of air therebetween having a constant width.

The pole piece 21 is also referred to as magnetic-pole piece, and serves, as a magnetic member, to transmit a magnetic flux from the inner rotor 1 to the outer rotor 3 or from the outer rotor 3 to the inner rotor 1. It has been described that each pole piece 21 of the pole piece module 2 is formed by stacking electromagnetic steel sheets in the axial direction. However, the pole piece 21 may be formed by stacking electromagnetic steel sheets in the radial direction or may be a dust core, and only has to be a magnetic member.

The pole pieces 21, the nonmagnetic parts 22, and the axial-direction fixation members 23 may be molded integrally with each other. As a molding resin for integral molding, polyphenylene sulfide (PPS) resin, polybutylene terephthalate (PBT) resin, epoxy resin, unsaturated polyester resin, or the like may be used. This molding resin forms the nonmagnetic parts 22 and the axial-direction fixation members 23 other than the pole pieces 21, and is used for fixing the pole pieces 21. Thus, the molding resin is preferably a nonconductive and nonmagnetic material. With this configuration, eddy current is suppressed, which can contribute to improvement in efficiency of the device. Further, through integral molding with a mold, positioning accuracy of each pole piece 21 is enhanced as compared to a case of separate assembly, and it is possible to not only enhance a magnetic property but also to increase the strength of resin.

The outer rotor 3 provided on the radially-outer side of the pole piece module 2 with the gap layer of air therebetween has an outer rotor core 31, and an outer rotor magnet 32 formed of a permanent magnet. A plurality of the outer rotor magnets are arranged in the circumferential direction. In addition, as shown in FIG. 2, the outer rotor core 31 is fixed to an outer rotor shaft 33 having a shaft coaxial with the inner rotor shaft 11. Alternatively, the outer rotor core 31 may be integrated with the outer rotor shaft 33. Further, only a portion, of the outer rotor magnet 32, corresponding to a core back may be formed of electromagnetic steel sheets, and the other portion may be formed of an iron-steel material (e.g., S45C, SS400, or the like) which is inexpensive and easily workable. In addition, the inner rotor 1, the outer rotor 3, and the fixation members 23 for fixing the pole pieces 21 are retained rotatably via bearings.

Where the number of pole pairs in the inner rotor 1 is defined as Nh, the number of magnetic poles of the pole pieces in the pole piece module 2 is defined as Np, and the number of pole pairs in the outer rotor 3 is defined as Nl, a relationship in the following Expression (1) is satisfied.

$$\mathrm{Np = Nl+Nh \ ... \ Expression \ (1)}$$

At this time, where a speed reduction ratio is defined as Gr, the following Expression (2) is satisfied.

$$\mathrm{Gr = Nl/Nh \ ... \ Expression \ (2)}$$

in which the speed reduction ratio Gr is obtained by dividing the number Nl of pole pairs of the outer rotor 3 by the number Nh of pole pairs of the inner rotor 1. The speed of the inner rotor 1 is multiplied by 1/Gr and is transmitted to the outer rotor 3, and the torque of the inner rotor 1 is multiplied by Gr and is transmitted to the outer rotor 3.

The present embodiment 1 is an example in which Nl = 26, Np = 30, and Nh = 4, and thus the speed reduction ratio Gr = 6.5 is satisfied. In addition, a case where Expression (1) is Np = Nl-Nh, e.g., Nl = 26, Np = 22, and Nh = 4, is also applicable, and all combinations satisfying Expressions (1), (2) can be adopted.

The present embodiment is characterized by a mechanism for fixing the pole piece module 2, the inner rotor 1 and the outer rotor 3 rotate in the same direction, and rotational force is transmitted from the inner rotor 1 to the outer rotor 3. As compared to a case where the pole piece module 2 is not fixed, that is, the outer rotor 3 is fixed and the pole piece module 2 is caused to rotate, transmission torque is decreased. However, when the pole piece module 2 is fixed, a measure to cope with centrifugal force is unnecessary. If the pole piece module 2 is not fixed, displacement in the radial direction of the pole piece module 2 due to centrifugal force is considered, and for example, connection parts need to be provided to a radially-outer surface and a radially-inner surface of each pole piece 21. However, in the present embodiment in which the pole piece module 2 is fixed, such a measure is unnecessary, and the outer rotor and the inner rotor can each be provided with the air gap layer having a minimum width, so that magnetic flux density is improved and an effect of improving transmission torque is obtained.

The magnetic gear device 100 according to the present embodiment 1 shown in FIG. 1 is, for example, of a rotary cylinder type, but the magnetic gear device 100 of a rotary disk type, a linear flat-plate type, or a linear cylinder type can also be produced.

Next, in the pole piece module 2 of the magnetic gear device 100 according to the present embodiment 1, the shape of each pole piece 21 will be described with reference to FIG. 1 and FIG. 3.

The sectional shape of the pole piece 21 along a plane perpendicular to the axial direction is represented by an area surrounded by a radially-outer arc 211, a radially-inner arc 212, and sides 213, 214 connecting these arcs in the radial direction, and is formed in a shape like a Japanese hand drum having depressed portions 21a at a radially-middle portion of the pole piece 21. Here, the sides 213, 214 are arranged in the circumferential direction. In addition, a radially-outer width which is a length in the circumferential direction of the radially-outer arc 211 of the pole piece 21 is defined as Rp_out, a radially-inner width which is a length in the circumferential direction of the radially-inner arc 212 of the pole piece 21 is defined as Rp_in, a radially-outer width in the circumferential direction of the nonmagnetic part 22 is defined as Ra_out, a radially-inner width in the circumferential direction of the nonmagnetic part 22 is defined as Ra_in, and a maximum circumferential width of each outer rotor magnet 32 of the outer rotor 3 is defined as Lm_out. Rp_in is larger than Rp_out, Ra_out is larger than Rp_in, and Lm_out is larger than Rp_out and is smaller than Ra_out. Depending on each diameter of Rp_out and Rp_in, Rp_in and Ra_out may have the same length. They satisfy the following relational expressions.

$$Rp\_out < Rp\_in$$

$$Rp\_in \leq Ra\_out$$

$$Rp\_out < Lm\_out < Ra\_out \quad ... \quad \text{Expression (3)}$$

Further, as described above, sides on both sides in the circumferential direction of each pole piece 21 are depressed at the radially-middle portion. The inner rotor magnets 13 are of eight poles (Nh×2), that is, small-number poles, and the outer rotor magnets 32 are of 52 poles (Nl×2), that is, large-number poles. Thus, when Rp_in is formed to be larger than Rp_out, magnetic fluxes generated from the magnets on the small-number-poles side each having a larger circumferential width than the magnets on the large-number-poles side are not saturated, and thus a larger amount of magnetic fluxes can be picked up. In addition, the adjacent magnets are disposed so as to be close to each other on the large-number poles side, and thus the magnetic fluxes circulate and leakage magnetic fluxes are likely to be increased. Thus, when Rp_out < Lm_out< Ra_out is satisfied, an area where the magnets and the pole pieces overlap each other decreases, and a leakage magnetic flux which travels from the magnet (N pole) via the pole piece to the magnet (S pole) can be reduced.

In addition, since the number of pole pairs of the inner rotor magnets 13 and that of the outer rotor magnets 32 are different, a radially-outer width of each inner rotor magnet 13 is always larger than Lm_out. When Rp_in is formed to be larger so as to correspond to the radially-outer width of the inner rotor magnet 13 to such an extent that leakage is not generated between the adjacent pole pieces 21, a leakage magnetic flux can be reduced between the inner rotor 1 and the pole pieces 21. Therefore, Rp_in is formed to be larger than Lm_out, whereby a leakage magnetic flux can be reduced and torque density can be further increased.

In addition, the radially-middle portion of each pole piece 21 is depressed so as to have a smaller length than the radially-outer arc and the radially-inner arc, whereby the directions in which magnetic fluxes flow can be unified. Thus, the magnetic fluxes can be guided such that a magnetic path from the inner rotor magnet 13 to the outer rotor magnet 32 becomes shorter, the magnetic path having lower magnetic resistance is achieved, and permeance is increased.

In addition, in FIG. 3, the depressed portions 21a of each pole piece 21 are located on an inner side in the radially-outer arc and the radially-inner arc, and the radially-middle portion of the pole piece 21 is located within virtual lines Lo (dotted-dashed lines) obtained by connecting both ends in the circumferential direction of the radially-outer arc 211 of the pole piece 21 to a circle center O (the center of the rotor shaft) of the outer rotor 3 and the inner rotor 1. With such arrangement, torque density can be further improved. This is not for causing the magnetic flux to travel to the circle center O, but is for contributing to permeance distribution. With such arrangement, magnetic fluxes can be guided such that a magnetic path from the inner rotor magnet 13 to the outer rotor magnet 32 becomes shortest, and are transmitted through the magnetic path having the smallest magnetic resistance, and permeance can be further increased.

When the nonmagnetic part 22 of the pole piece module 2 is formed of an insulating material such as resin, the radially-middle portion of the pole piece 21 is depressed so as to have a smaller length than the radially outer arc and the radially inner arc, whereby the pole piece 21 has an increased area for supporting itself against magnetic force for pulling the pole piece 21 toward the radially-outer side, so that strength can be increased. In addition, when the circumferential width on the radially-outer side or the radially-inner side of the pole piece 21 is larger than that of the radially-middle portion of the pole piece 21, a wedge effect can limit movement of the pole piece 21 in a direction toward the radially-middle portion from a side having a larger circumferential width. Further, as compared to a case where the sides on both sides in the circumferential direction of the pole piece 21 each have a linear shape, a surface area that comes into contact with the nonmagnetic part 22 is increased, thereby also improving a cooling effect.

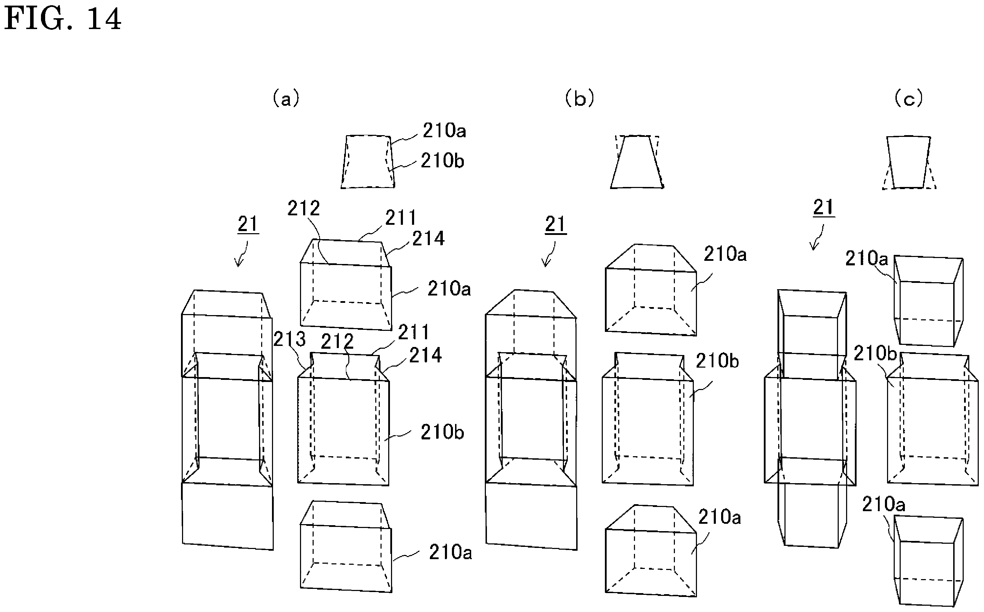

FIGS. 14(a), (b), (c) show examples of different pole pieces 21, and each include a top view and an expanded perspective view. In the top view, an axially-middle part 210b is shown by broken lines. In FIGS. 14(a), (b), (c), the sectional shapes in the axial direction of both-axially-end parts 210a of the pole piece 21 are each a trapezoid area surrounded by a radially-outer arc 211, a radially-inner arc 212, and sides 213, 214 connecting these arcs in the radial direction, and only the sectional shape in the axial direction of the axially-middle part 210b of the pole piece 21 has sides, on both sides in the circumferential direction, depressed at a radially-middle portion. The pole piece 21 is formed by stacking the both-axially-end parts 210a and the axially-middle part 210b.

In FIG. 14(a), the sides 213, 214 forming each both-axially-end part 210a respectively connect the both ends of the radially-outer arc 211 to both ends of the radially-inner arc 212, the radially-outer arc 211 of the both-axially-end part 210a and that of the axially-middle part 210b are equal and the radially-inner arc 212 of the both-axially-end part 210a and that of the axially-middle part 210b are also equal, and only the sides on both sides in the circumferential direction of the axially-middle part 210b are depressed at the radially-middle portion. Meanwhile, in FIG. 14(b), the radially-inner arc 212 of the both-axially-end part 210a and that of the axially-middle part 210b are equal, and the sides 213, 214 of the both-axially-end part 210a are along the sides 213, 214 of the axially-middle part 210b from the radially-inner side, and are formed by line segments that extend from the radially-inner arc 212 to the radially-outer side. Therefore, as seen in the top view, the radially-outer arc 211 of the axially-middle part 210b is longer than the radially-outer arc 211 of the both-axially-end part 210a. In addition, in FIG. 14(c), the radially-outer arc 211 of the both-axially-end part 210a and that of the axially-middle part 210b are equal, and the sides 213, 214 of the both-axially-end part 210a are along the sides 213, 214 of the axially-middle part 210b from the radially-outer side, and are formed by line segments extending from the radially-outer arc 211 to the radially-inner side. Therefore, as seen in the top view, the radially-inner arc 212 of the axially-middle part 210b is longer than the radially-inner arc 212 of the axially-middle part 210a.

As described above, each both-axially-end part 210a has a simple trapezoid shape, and thus can be produced through a process achieving a higher yield rate, as compared to the shape of the axially-middle part 210b. Thus, with the pole piece 21 obtained by combining them, torque density is increased, centrifugal resistance to the radially-outer side is also increased, and a yield rate can be enhanced.

The outer rotor 3, and the pole pieces 21, the nonmagnetic parts 22, and the axial-direction fixation members 23 which form the pole piece module 2, may be integrally molded by using a mold such as resin, and the production is performed by separating the outer rotor 3 and the pole piece module 2 after the assembly. In this case, the pole pieces 21 and the outer rotor 3 are connected with molding resin therebetween at a plurality of positions in the circumferential direction, in such a degree that the pole piece 21 and the outer rotor 3 can be cut with pliers. At this time, the outer rotor 3 and the pole piece module 2 are retained with a constant space therebetween by the molding resin. As compared to separate assembly, the number of parts for the assembly can be reduced, so that working costs can be reduced. Further, the positioning accuracy in the radial direction can be enhanced during assembly, and the width of a gap, which is a gap between the outer rotor 3 and the pole piece module 2, can be further reduced. Accordingly, the amount of magnets to be used can be decreased, and costs can be reduced. Further, positioning accuracy is high, and thus axial deflection can also be prevented. In addition, positioning accuracy in the axial direction can also be enhanced, and thus there is no possibility that the amount of leakage magnetic fluxes exceeding the amount assumed in designing is generated.

In addition, the outer rotor core 31, the pole piece 21, and the inner rotor core 12 are formed of soft magnetic materials such as an electromagnetic steel sheet, a dust core, an amorphous metal, and permendur. However, depending on specifications, a ferromagnetic material which is an iron-steel material (e.g., S45C, SS400, or the like) can be used in some cases. In order to prevent eddy current due to change in a magnetic flux, an electromagnetic steel sheet is formed by stacking a plurality of thin plates.

In addition, in the magnetic gear device 100 according to the present embodiment, a bracket (not shown) may be formed of an insulating resin. In addition to integral molding with a mold as descried above, a mold material and the bracket may be formed of an insulating resin, whereby electrolytic corrosion due to electric connection between an inner ring and an outer ring of a bearing can be prevented, and the quality of the magnetic gear device can be further enhanced.

As described above, in the magnetic gear device according to the present embodiment 1, the inner rotor 1, the pole piece module 2, and the outer rotor 3 are arranged in this order toward the radially-outer side from a shaft center side, and the pole piece module 2 is fixed, whereby the outer rotor 3 and the inner rotor 1 can each be provided with a minimum gap width, thereby providing an effect that magnetic flux density is improved and transmission torque can be improved.

In addition, in a cross section in the axial direction of the pole piece module 2, where the radially-outer width in the circumferential direction of the pole piece 21 is defined as Rp_out, the radially-inner width in the circumferential direction of the pole piece 21 is defined as Rp_in, the radially-outer width in the circumferential direction of the nonmagnetic part 22 is defined as Ra_out, the radially-inner width in the circumferential direction of the nonmagnetic part 22 is defined as Ra_in, and the maximum circumferential width of each outer rotor magnet 32 of the outer rotor 3 is defined as Lm_out, Rp_in is larger than Rp_out, Ra_out is not smaller than Rp_in, and Lm_out is larger than Rp_out and is smaller than Ra_out. With this configuration, a larger amount of magnetic fluxes of the inner rotor magnets 13 can be picked up and thus a main magnetic flux can be increased, size and weight reduction of the device becomes possible due to a less amount of magnets and pole piece material, and higher transmission torque can be obtained.

In addition, in the cross section in the axial direction of the pole piece module 2, the pole piece 21 is formed so as to be depressed at the radially-middle portion thereof, and thus the pole piece 21 has an increased area for supporting itself against magnetic force by which the pole piece 21 is pulled to the radially-outer side, so that strength can be increased. In addition, as compared to a case where the sides on both sides in the circumferential direction of the pole piece 21 each have a linear shape, a surface area that comes into contact with the nonmagnetic part 22 is increased, thereby also improving a cooling effect.

As described above, a smaller-sized and inexpensive magnetic gear device can be provided.

Embodiment 2

Hereinafter, a pole piece module of a magnetic gear device according to embodiment 2 will be described with reference to FIG. 4 to FIG. 6.

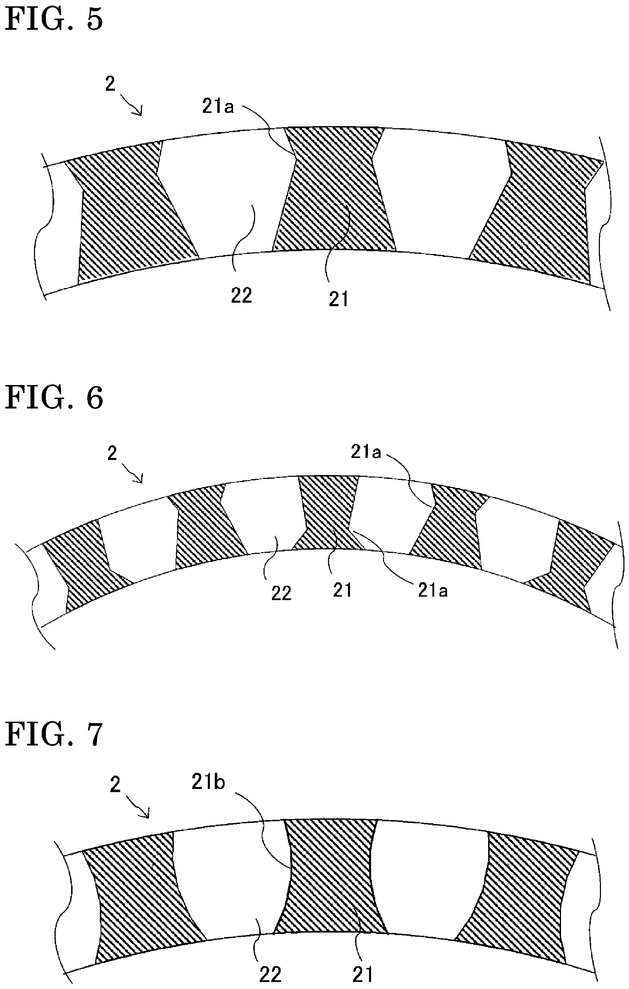

FIG. 4 is a partial enlarged view of the pole piece module 2 according to embodiment 2, FIG. 5 is a partial enlarged view of another pole piece module 2, and FIG. 6 is a partial enlarged view of still another pole piece module 2. In FIG. 3 according to embodiment 1, the both sides connecting the radially-outer arc and the radially-inner arc of the pole piece 21 in the radial direction have the depressed portions 21a at the radially-middle portion thereof, but, in an example shown in the present embodiment 2, the depressed portions 21a are not located at the radially-middle portion thereof. The other configurations are the same as in embodiment 1, and therefore description thereof is omitted.

The depressed portions 21a on the both sides connecting the radially-outer arc and the radially-inner arc of each pole piece 21 in the radial direction are located on the inner peripheral side with respect to the radially-middle portion in FIG. 4, and are located on the radially-inner side with respect to the radially-middle portion in FIG. 5. In addition, FIG. 6 shows an example in which the depressed portions 21a on the both sides connecting the radially-outer arc and the radially-inner arc of the pole piece 21 in the radial direction are located alternately on the radially-inner side and on the radially-outer side with respect to the radially-middle portion.

Any radial portions of the both sides connecting both the radially-inner-and-outer arcs of each pole piece 21 in the radial direction may be depressed. When magnetic force to the radially-outer side is small, the depressed portions 21a may be provided on the inner peripheral side in the radial direction. Meanwhile, when magnetic force to the radially-outer side is large, the depressed portions 21a may be provided on the outer peripheral side. Thus, improvement in torque density and improvement in the strength of the pole piece 21 can be made in a well-balanced manner. In addition, magnetic flux saturation can be adjusted in the same manner. Also, from the viewpoint of magnetic flux saturation, each radial position of the depressed portions 21a is changed by using the pole pieces, whereby improvement in torque density and improvement in the strength of the pole piece 21 can be made in a well-balanced manner.

In an example shown in FIG. 6, the radial positions of the depressed portions 21a of each adjacent pole piece 21 are shifted alternately on the radially-inner side and the radially-outer side in the radial direction, but the depressed portions 21a do not necessarily need to be shifted alternately.

As described above, in the magnetic gear device according to the present embodiment 2, in addition to the effects in embodiment 1, each pole piece 21 has the depressed portions 21a in any radial portions of the sides on the both sides connecting the arcs in the radial direction, and the radial positions of the depressed portions 21a are changed according to magnetic force, whereby improvement in torque density and improvement in the strength of the pole piece 21 can be made in a well-balanced manner.

Embodiment 3

Hereinafter, a pole piece module of a magnetic gear device according to embodiment 3 will be described with reference to FIG. 7.

FIG. 7 is a partial enlarged view of the pole piece module 2 according to embodiment 3, which is different from embodiments 1 and 2 as follows: the both sides connecting both the radially-inner-and-outer arcs of the pole piece 21 in the radial direction are arc-shaped smooth curved lines and have dent portions 21b. The other configurations are the same as in embodiments 1 and 2, and therefore description thereof is omitted.

As shown in FIG. 7, it is preferable that the both sides connecting both the radially-inner-and-outer arcs of each pole piece 21 in the radial direction are dented at the radially-middle portion so as to have arc shapes, and the pole piece 21 is formed to be narrow in the middle. In FIG. 7, the dent portions 21b indicate the narrowed position of the pole piece 21. However, as described in embodiment 2, the radial positions of the dent portions 21b do not necessarily need to be at the middle portion, and the dent portions 21b of the adjacent pole pieces 21 may be located alternately on the outer peripheral side and the inner peripheral side and may not necessarily need to be located alternately.

According to the present embodiment 3 as described above, the same effects as in embodiments 1 and 2 are provided, and the sides connecting both the radially-inner-and-outer arcs in the radial direction and disposed on both sides in the circumferential direction are formed as smooth curved lines, and, for example, are dented so as to have arc shapes, whereby magnetic fluxes flow more smoothly and torque density can be further improved.

Embodiment 4

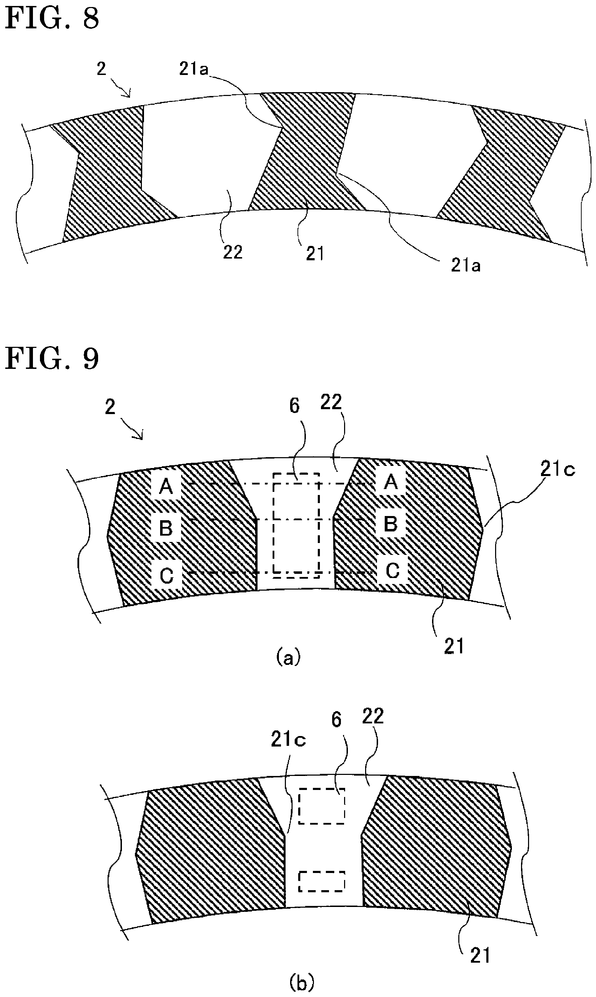

Hereinafter, a pole piece module of a magnetic gear device according to embodiment 4 will be described with reference to FIG. 8.

In embodiments 1 to 3, each pole piece 21 has a line-symmetrical structure in which any radial positions of the both sides connecting both the radially-inner-and-outer arcs in the radial direction are depressed or narrowed. In embodiment 4, an example in which each pole piece 21 has a shape that, on the sides which connect both the radially-inner-and-outer arcs in the radial direction and are on both sides in the circumferential direction, the positions of the depressed portions 21a are different from each other, will be described. The other configurations are the same as in embodiments 1 to 3, and therefore description thereof is omitted.

FIG. 8 is a partial enlarged view of the pole piece module 2 according to embodiment 4, and the positions of the depressed portions 21a provided on the sides connecting both the radially-inner-and-outer arcs of the pole piece 21 in the radial direction are different from each other. The depressed portion 21a of one side is located on the radially-outer side with respect to the radially-middle portion, and the depressed portion 21a of another side is located on the radially-inner side with respect to the radially-middle portion.

As compared to each case where the radial positions of the depressed portions 21a are the same on both sides in the circumferential direction of the pole piece 21 as shown in FIG. 3 to FIG. 6, in a case where the radial positions of the depressed portions 21a are different from each other on both sides in the circumferential direction of the pole piece 21 as in the present embodiment 4, magnetic saturation can be relaxed at the positions of the depressed portions 21a. That is, any position where the width of a magnetic path is minimized is not provided, and thus a main magnetic flux can be increased with a smaller surface area of the magnetic member without narrowing the width of the magnetic path. Thus, weight reduction of the pole piece 21 can be achieved, leading to simplification of the fixation members 23 for fixing the pole piece module 2 and weight reduction of the magnetic speed reducer itself. Further, the radial positions of the depressed portions 21a are different from each other on both sides in the circumferential direction of one pole piece 21, so that the strong pole piece module 2 capable of withstanding magnetic force toward the radially-outer side of the pole piece 21 and magnetic force toward the radially-inner side of the pole piece 21 can be achieved.

In FIG. 8, the depressed portions 21a are provided such that the sectional shape of the pole piece 21 along a plane perpendicular to the axial direction is formed in a Z shape of the English alphabet, but the depressed portions 21a may be provided so as to form mirror symmetry in the pole piece 21.

In addition, if the magnetic gear device is a magnetic-geared rotary electric machine, skew is provided to the magnet to reduce cogging torque and torque ripple in some cases. In accordance with a skew angle, the pole piece 21 having a mirror-symmetric shape may be stacked on the pole piece 21 having a Z shape as described above, a plurality of the Z-shaped pole pieces 21 and the mirror-symmetric pole pieces 21 may be stacked in order or randomly, or may be stacked spirally in the axial direction.

In FIG. 8, as shown in FIGS. 3 to 6, an example in which the depressed portions 21a are provided on both sides in the circumferential direction of the pole piece 21 is shown, but, as shown in FIG. 7, the sides on both sides in the circumferential direction of the pole piece 21 may be formed as arc-shaped smooth curved lines. In this case, the positions, in the pole piece 21, where the arcs on both sides in the circumferential direction of the pole piece 21 are located on the innermost side from the radial direction, are dent portions, and the radial positions of the formed dent portions are different from each other on the both sides.

According to the present embodiment 4 as described above, a main magnetic flux can be increased with a less surface area of the magnetic member, without narrowing the width of a magnetic path in the pole piece 21. Thus, weight reduction of the pole piece 21 can be achieved, leading to weight reduction of the magnetic gear device itself. Further, the strong pole piece module 2 capable of withstanding magnetic force toward the radially-outer side of the pole piece 21 and magnetic force toward the radially-inner side of the pole piece 21 can be achieved.

In embodiments 1 to 4, the pole piece 21 has a shape that any radial portions of the both sides connecting both the radially-inner-and-outer arcs in the radial direction are depressed or narrowed, but one side may have a depressed portion and the other side may have a dent portion. In the pole piece 21, the both sides connecting both the radially-inner-and-outer arcs in the radial direction only have to each have a depressed portion or a dent portion formed at any radial position.

Embodiment 5

Hereinafter, a magnetic gear device according to embodiment 5 will be described with reference to FIG. 9 to FIG. 12.

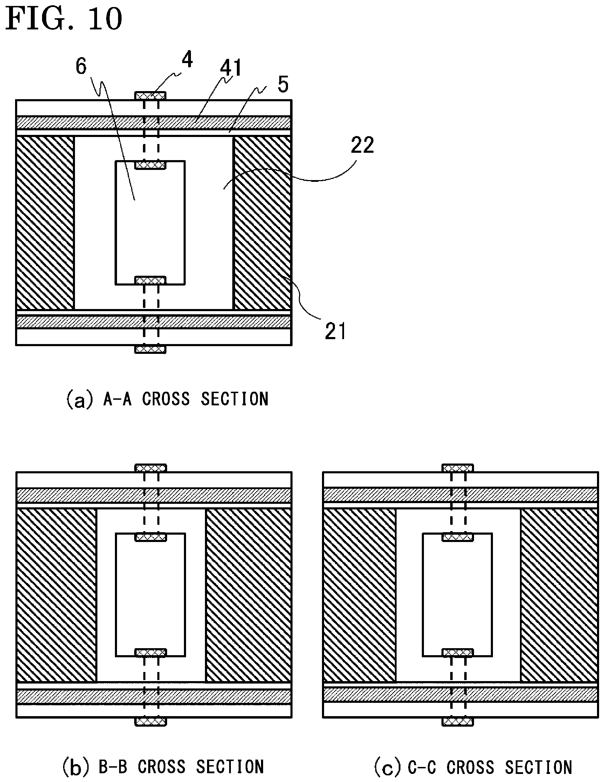

FIG. 9 is a partial enlarged view of the pole piece module 2 according to embodiment 5, and (a), (b), (c) in FIG. 10 are a sectional view taken in an A-A direction, a sectional view taken in a B-B direction, and a sectional view taken in a C-C direction in FIG. 9(a), and are sectional views parallel to the axial direction, respectively. In each of embodiments 1 to 4, the example in which the sectional shape in the axial direction of the pole piece 21 is represented by the area surrounded by the radially-outer arc, the radially-inner arc, and the sides connecting these arcs in the radial direction, and is formed in a shape like a Japanese hand drum having the depressed portions 21a or the dent portions 21b at the radially-middle portion, has been shown. In the present embodiment 5, an example in which the sectional shape in the axial direction of the pole piece 21 is formed in such a drum shape that the radially-middle portion of the pole piece 21 has bulging portions 21c, will be described. The other configurations are the same as in embodiments 1 to 4, and therefore description thereof is omitted.

As shown in FIG. 9(a), the sides on both sides in the circumferential direction of each pole piece 21 have bulging portions 21c obtained by bulging any radial portions. As indicated by a broken line in FIG. 9(a), a void portion 6 which does not penetrate in the axial direction is provided inside the nonmagnetic part 22 of the pole piece module 2. FIG. 9(b) shows an example in which a plurality of void portions 6 are provided so as to avoid the bulging portion 21c. In addition, a sectional view parallel to an axis taken along a line A-A in FIG. 9(a) is shown in FIG. 10(a), a sectional view parallel to the axis taken along a line B-B in FIG. 9(a) is shown in FIG. 10(b), and a sectional view parallel to the axis taken along a line C-C in FIG. 9(a) is shown in FIG. 10(c). As seen in FIG. 10(b), each bulging portion 21c of the pole piece 21, out of portions in the pole piece 21, is located closest to the void portion 6. However, the void portion 6 is provided apart from the pole piece 21 so as not to come into contact therewith.

It is described that the pole piece module 2 is fixed by the fixation members 23 with reference to FIG. 2, but, if the pole piece module 2 is desired to be fixed more strongly, fastening members 4 may be mounted to fix the pole piece module 2 as shown in FIG. 10(a) to FIG. 10(c). In this case, at both ends in the axial direction of the pole piece module 2, electric insulation layers 5 and fixation parts 41 are used, and the nonmagnetic part 22 is fixed by the fastening members 4 inside the void portion 6 and the fastening members 4 outside the void portion 6.

When no fastening member 4 is used, production may be performed through integral molding with a mold as described above. For example, a mold may be produced so as to form a cross section shown in FIG. 10 and integral molding may be performed.

If the void portion 6 shown in FIG. 10(a) to FIG. 10(c) is filled with air or a material having a high thermal conductivity, the pole piece 21 can also be efficiently cooled.

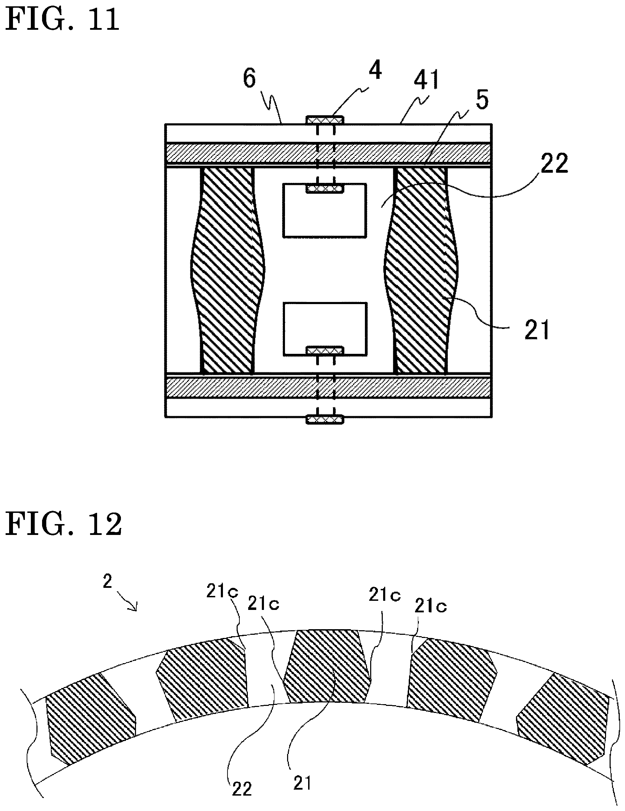

In addition, FIG. 11 shows a partial enlarged sectional view of still another pole piece module 2 in a direction parallel to the axis. The surfaces on both sides in the circumferential direction of each pole piece 21 may bulge in the circumferential direction at the axially-middle part as shown in FIG. 11. The void portion 6 divided into two portions in the axial direction is provided, and the axially-middle part of the pole piece 21 is thicker in the circumferential direction than the both ends in the axial direction of the pole piece 21. With this configuration, in addition to the above described effects, a leakage magnetic flux can be reduced at ends in the axial direction, and transmission torque can be increased.

FIG. 12 is a partial enlarged view illustrating an example of still another pole piece module 2 according to embodiment 5 and is a sectional view in the axial direction. As shown in FIG. 12, the sides on both sides in the circumferential direction of each pole piece 21 may have portions bulged at any radial positions, and the radial positions of the bulging portions 21c of the pole pieces 21 adjacent in the circumferential direction may be disposed so as to be deviated from each other. As described above, when the radial positions of the bulging portions 21c of the adjacent pole pieces 21 are disposed so as to be deviated from each other, the distance between the bulging portions 21c can be ensured to be larger than that in a case where the radial direction positions are the same, so that short circuit of a magnetic flux can be more assuredly prevented between the respective bulging portions 21c. In addition, the above shape allows the surface area of the pole piece 21 to be increased as compared to a linear shape with no bulging portion 21c, and thus the effect of cooling the pole pieces 21 is improved if the void portion 6 is provided between the pole pieces 21 and is filled with air or a material having a high thermal conductivity.

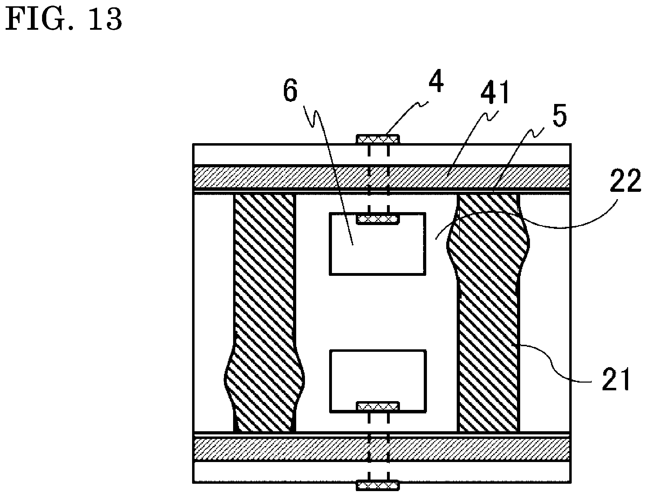

FIG. 13 is an enlarged view of the pole piece module 2 showing a modification of FIG. 11 and is a partial sectional view in the axial direction, and the positions of the thick portions of the adjacent pole pieces 21 may be different from each other in the axial direction.

The structure that each pole piece 21 has smooth curved lines in the axial direction as shown in FIG. 11 and FIG. 13 can be achieved by a dust core. A desired shape is easily formed when a dust core is used, so that eddy current loss can be reduced in the magnetic gear device in which magnetic fluxes pass in all the directions, that is, the axial direction, the circumferential direction, and the radial direction.

As described above, in the magnetic gear device according to the present embodiment 5, the pole piece 21 in the pole piece module 2 has a drum shape in which the radially-middle portion has the bulging portions 21c. Therefore, a leakage magnetic flux can be reduced at ends in the radial direction, and transmission torque can be increased. In addition, as compared to a case where the sides on both sides in the circumferential direction of the pole piece 21 each have a linear shape, a surface area that comes into contact with the nonmagnetic part 22 is increased, thereby also improving a cooling effect.

Further, the sides on both sides in the circumferential direction of the pole piece 21 have portions bulged at any radial positions, and the radial positions of the bulging portions 21c of the pole pieces 21 adjacent in the circumferential direction are disposed so as to be deviated from each other, whereby the distance between the bulging portions 21c can be ensured to be large, so that short circuit of a magnetic flux can be more assuredly prevented between the respective bulging portions 21c.

In the magnetic gear device according to the present embodiment 5, the void portion 6 which does not penetrate in the axial direction is provided inside the nonmagnetic part 22 of the pole piece module 2, and thus the pole piece 21 can also be efficiently cooled if the void portion 6 is filled with air or a material having a high thermal conductivity.

The fastening members 4 are mounted inside and outside the void portion 6 in the axial direction, and the fastening members 4 are tightened via the electric insulation layers 5 and the fixation parts 41 at both ends in the axial direction of the pole piece module 2, whereby the nonmagnetic part 22 can be fixed.

In the magnetic gear device according to the present embodiment 5, the axially-middle part of the pole piece 21 is bulged in the circumferential direction, and, therefore, the void portion 6 divided into two portions in the axial direction is provided inside the nonmagnetic part 22, and the axially-middle part of the pole piece 21 can be formed to be thicker than other portions in the axial direction of the pole piece 21. Thus, a leakage magnetic flux can be reduced at ends in the axial direction and transmission torque can be increased.

As a matter of course, a structure in which the void portion 6 is provided inside the nonmagnetic part 22 in the axial direction can also be applied to the pole piece module in which each pole piece 21 has the radially-middle portion having the depressed portions 21a or the dent portions 21b in the magnetic gear device according to embodiments 1 to 4, and the same effects can be achieved.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

It is therefore understood that numerous modifications which have not been exemplified can be devised without departing from the technical scope of the specification of the present disclosure. For example, at least one of the constituent components may be modified, added, or eliminated. At least one of the constituent components mentioned in at least one of the preferred embodiments may be selected and combined with the constituent components mentioned in another preferred embodiment.

DESCRIPTION OF THE REFERENCE CHARACTERS

1 inner rotor
2 pole piece module
3 outer rotor
4 fastening member
5 electric insulation layer
6 void portion
11 inner rotor shaft
12 inner rotor core
13 inner rotor magnet
21 pole piece
21a depressed portion
21b dent portion
21c bulging portion
22 nonmagnetic part
23 fixation member
31 outer rotor core
32 outer rotor magnet
33 outer rotor shaft
41 fixation part
100 magnetic gear device
210a both-axially-end part
210b axially-middle part
211 radially-outer arc
212 radially-inner arc
213, 214 side

**Claims**

1. A magnetic gear device comprising, in a radial direction about an axis:

an inner rotor;
a pole piece module which is provided apart from the inner rotor and in which a plurality of pole pieces formed of magnetic members and a plurality of nonmagnetic parts are arranged alternately in a circumferential direction; and
an outer rotor which is provided apart from the pole piece module and includes a plurality of outer rotor magnets arranged in the circumferential direction, wherein
in a cross section in a direction of the axis, each pole piece has a shape that has a first side having a radially-outer width Rp_out, a second side having a radially-inner width Rp_in, and a third side and a fourth side connecting the first side and the second side in the radial direction, and
where a maximum circumferential width of each outer rotor magnet is defined as Lm_out, and a radially-outer width of each nonmagnetic part is defined as Ra_out,

the radially-inner width Rp_in of the pole piece is larger than the radially-outer width Rp_out of the pole piece, and
the maximum circumferential width Lm_out of the outer rotor magnet is larger than the radially-outer width Rp_out of the pole piece and is smaller than the radially-outer width Ra_out of the nonmagnetic part.

2. The magnetic gear device according to claim 1, wherein the radially-inner width Rp_in of the pole piece is larger than the maximum circumferential width Lm_out of the outer rotor magnet.

3. The magnetic gear device according to claim 1 or 2, wherein the pole piece module is fixed at both ends thereof in the direction of the axis by fixation members.

4. The magnetic gear device according to any one of claims 1 to 3, wherein
in the shape of the pole piece in the cross section in the direction of the axis, a radially-middle portion of the pole piece is located within lines extending from both ends of the first side to a shaft center.

5. The magnetic gear device according to any one of claims 1 to 3, wherein
in the shape of the pole piece in the cross section in the direction of the axis, the third side and the fourth side connecting the first side and the second side in the radial direction each have a depressed portion or a dent portion in the radial direction.

6. The magnetic gear device according to claim 5, wherein
in the shape of the pole piece in the cross section in the direction of the axis, the third side and the fourth side connecting the first side and the second side in the radial direction each have the depressed portion or the dent portion at the radially-middle portion.

7. The magnetic gear device according to claim 5, wherein
in the shape of the pole piece in the cross section in the direction of the axis, one side of the third side and the fourth side connecting the first side and the second side in the radial direction has the depressed portion or the dent portion on a radially-outer side, and another side of the third side and the fourth side has the depressed portion or the dent portion on a radially-inner side.

8. The magnetic gear device according to claim 5, wherein
the pole piece module includes the pole piece formed such that, in the shape of the pole piece in the cross section in the direction of the axis, the depressed portions or the dent portions provided on the third side and the fourth side connecting the first side and the second side in the radial direction are at different locations.

9. The magnetic gear device according to any one of claims 1 to 3, wherein
in the shape of the pole piece in the cross section in the direction of the axis, the third side and the fourth side connecting the first side and the second side in the radial direction each have a bulging portion in the radial direction.

10. The magnetic gear device according to claim 9, wherein
in the shape of the pole piece in the cross section in the direction of the axis, the third side and the fourth side connecting the first side and the second side in the radial direction each have the bulging portion at the radially-middle portion.

11. The magnetic gear device according to claim 9, wherein
one side of the third side and the fourth side connecting the first side and the second side in the radial direction has the bulging portion on the radially-outer side, and another side of the third side and the fourth side has the bulging portion on the radially-inner side.

12. The magnetic gear device according to claim 9, wherein
the pole piece module is formed such that, in the shape of the pole piece in the cross section in the direction of the axis, positions of the bulging portions provided on the third side and the fourth side connecting the first side and the second side in the radial direction are different between the adjacent pole pieces.

13. The magnetic gear device according to any one of claims 1 to 3, wherein

in the shape of the pole piece in the cross section of the direction of the axis,
both-axially-end parts of the pole piece each have a trapezoidal shape that has a third side and a fourth side connecting the first side and the second side in the radial direction, and
an axially-middle part of the pole piece has a shape that the third side and the fourth side connecting the first side and the second side in the radial direction each have a depressed portion or a dent portion in the radial direction.

14. The magnetic gear device according to any one of claims 1 to 13, wherein
the pole piece module has, in the nonmagnetic part, a void portion which is provided apart from the pole piece and does not penetrate in the direction of the axis.

15. The magnetic gear device according to claim 14, wherein the void portion is fastened from inside and outside thereof by fastening members, to fix the nonmagnetic part.

16. The magnetic gear device according to any one of claims 1 to 15, wherein
the pole piece has, at a position in the direction of the axis, a portion that is thicker than widths in the circumferential direction at the both ends in the direction of the axis.

17. The magnetic gear device according to any one of claims 1 to 16, wherein the pole piece is formed of a dust core.

18. The magnetic gear device according to claim 3, wherein

the nonmagnetic part of the pole piece module and the fixation members for fixing the pole piece module are formed of the same resin, and
the pole piece, the nonmagnetic part, and the fixation members are integrally molded.

FIG. 1

FIG. 2

# FIG. 3

# FIG. 4

FIG. 5

FIG. 6

FIG. 7

# FIG. 8

# FIG. 9

(a)

(b)

# FIG. 10

(a) A-A CROSS SECTION

(b) B-B CROSS SECTION

(c) C-C CROSS SECTION

# FIG. 11

# FIG. 12

FIG. 13

FIG. 14

21

**EP 4 471 292 A1**

## INTERNATIONAL SEARCH REPORT

International application No.

**PCT/JP2023/001629**

### A. CLASSIFICATION OF SUBJECT MATTER

*F16H 49/00*(2006.01)i
FI: F16H49/00 A

According to International Patent Classification (IPC) or to both national classification and IPC

### B. FIELDS SEARCHED

Minimum documentation searched (classification system followed by classification symbols)

F16H49/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2016-135014 A (IHI CORPORATION) 25 July 2016 (2016-07-25) | 1-18 |
| A | JP 2015-61422 A (DENSO CORPORAION) 30 March 2015 (2015-03-30) | 1-18 |
| A | WO 2014/109268 A1 (HITACHI METALS, LIMITED) 17 July 2014 (2014-07-17) | 1-18 |
| A | GB 2545154 A (MAGNOMATICS LIMITED) 14 June 2017 (2017-06-14) | 1-18 |
| A | KR 10-2016-0117887 A (INDUSTRY-ACADEMIC COOPERATION FOUNDATION, CHOSUN UNIVERSITY) 11 October 2016 (2016-10-11) | 1-18 |

☐ Further documents are listed in the continuation of Box C.  ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **03 April 2023** | **11 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

22

**INTERNATIONAL SEARCH REPORT**
Information on patent family members

International application No.

**PCT/JP2023/001629**

| Patent document cited in search report | | | Publication date (day/month/year) | Patent family member(s) | | | Publication date (day/month/year) |
|---|---|---|---|---|---|---|---|
| JP | 2016-135014 | A | 25 July 2016 | (Family: none) | | | |
| JP | 2015-61422 | A | 30 March 2015 | US | 2015/0076948 | A1 | |
| | | | | DE | 102014111848 | A1 | |
| | | | | CN | 104467325 | A | |
| WO | 2014/109268 | A1 | 17 July 2014 | US | 2016/0006335 | A1 | |
| | | | | CN | 104919219 | A | |
| GB | 2545154 | A | 14 June 2017 | US | 2018/0269770 | A1 | |
| | | | | WO | 2017/033001 | A1 | |
| | | | | CN | 108141068 | A | |
| | | | | KR | 10-2018-0053317 | A | |
| KR | 10-2016-0117887 | A | 11 October 2016 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016135014 A